# EUROPEAN PATENT APPLICATION

(11) **EP 3 043 543 A2**
(43) Date of publication of application: **13.07.2016**
(21) Application number: 16150655.5
(22) Date of filing: 08.01.2016
(51) Int. Cl.: H04M 19/04, H04M 1/725, H04M 1/57, H04M 3/42

(54) **METHOD FOR PROVIDING COMMUNICATION SERVICE AND ELECTRONIC DEVICE THEREFOR**

(30) Priority: 08.01.2015 KR 20150002783
(71) Applicant: Samsung Electronics Co., Ltd., Gyeonggi-do 16677 (KR)
(72) Inventor: KIM, Geon Soo, Gyeonggi-do 16663 (KR); KIM, Han Jib, Gyeonggi-do 16698 (KR); JEON, Yong Joon, Gyeonggi-do 18446 (KR); CHOI, Bo Kun, Seoul 08090 (KR)
(74) Representative: Jenkins, Richard Gavin

(57) **Abstract**

A method for providing a communication service is provided. The method includes receiving a call connection request from a calling electronic device; receiving multimedia data from the calling electronic device through a communication channel while the call connection request is maintained; and additionally outputting the multimedia data on an output screen for providing notification of the call connection request.

## Description

### PRIORITY

The present application is related to and claims benefit of a Korean patent application filed on January 8, 2015 in the Korean Intellectual Property Office and assigned Serial number 10-2015-0002783, the entire disclosure of which is hereby incorporated by reference.

### BACKGROUND OF THE INVENTION

### 1. Field of the Invention

The present disclosure relates to a method for providing a communication service and an electronic device therefor.

### 2. Background of the Invention

Recently, with the development of communication technologies, a network service based on a packet-switched (PS) scheme with which a circuit-switched (CS) scheme is replaced has been provided. A voice over long term evolution (VoLTE) based voice call has been served in a communication network based on the PS scheme.

A variety of communication functions, such as an enriched call function for sharing a multimedia file such as a video or an image, an enhanced phonebook function for obtaining status information of the called party, registered in an address book, in real time, and an enriched messaging function for sharing a file during a one-to-one chat or a group chat, may be provided during a voice call using a PS network.

As such, a communication service, which provides a service discovery, an instant message chat, a voice call, a video call, a video share, an image share, and a multimedia file transfer such as a voice file transfer, a video file transfer, a text file transfer, is referred to as a rich communication suite (RCS) service.

The above information is presented as background information only to assist with an understanding of the present disclosure. No determination has been made, and no assertion is made, as to whether any of the above might be applicable as prior art with regard to the present disclosure.

### SUMMARY OF THE INVENTION

To address the above-discussed deficiencies, it is a primary object to provide at least the advantages described below. Accordingly, an aspect of the present disclosure is to provide a method for providing a communication service to provide various additional services during a call connection request according to a packet-switched (PS) network and an electronic device therefor. Also, accordingly, another aspect of the present disclosure is to provide computer-readable storage media storing embodied thereon a program for executing a method for providing a communication service.

In accordance with an aspect of the present disclosure, a method for providing a communication service in a first electronic device is provided. The method may include receiving a call connection request from a second electronic device, providing notification of the call connection request, receiving multimedia data from the second electronic device through a communication channel while the call connection request is maintained, and outputting the multimedia data in response to the call connection request.

Other aspects, advantages, and salient features of the disclosure will become apparent to those skilled in the art from the following detailed description, which, taken in conjunction with the annexed drawings, discloses various embodiments of the present disclosure.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a rich communication suite (RCS) network according to various embodiments of the present disclosure;
FIG. 2 illustrates a configuration of an electronic device according to various embodiments of the present disclosure;
FIG. 3 illustrates an operation of transmitting multimedia data to a called electronic device at a calling electronic device during a call connection request according to various embodiments of the present disclosure;
FIGS. 4A and 4B illustrate an operation of transmitting multimedia data to a called electronic device at a calling electronic device during a call connection request according to various embodiments of the present disclosure;
FIG. 5 illustrates an operation of setting a fake call option in a called electronic device at a calling electronic device according to various embodiments of the present disclosure;
FIG. 6 illustrates an operation of displaying an optimum communication means of a called electronic device on a call list screen of a calling electronic device according to the optimum communication means which is available in the called electronic device according to various embodiments of the present disclosure;
FIG. 7 illustrates an operation of converting input multimedia data according to an optimum communication means which is available in a called electronic device and transmitting the converted multimedia data to the called electronic device at a calling electronic device according to various embodiments of the present disclosure;
FIGS. 8A, 8B, and 8C illustrate an operation of additionally outputting multimedia data received from a calling electronic device on an output screen for providing notification of a missed call at a called electronic device according to various embodiments of the present disclosure;
FIGS. 9A and 9B illustrate an operation of outputting status information of a calling electronic device, which is obtained according to a call connection request of the calling electronic device, at a called electronic device according to various embodiments of the present disclosure;
FIG. 10 illustrates an operation of outputting multimedia data received from a calling electronic device at an electronic device functionally connected with a called electronic device according to various embodiments of the present disclosure;
FIG. 11 illustrates an operation of transmitting multimedia data to a calling electronic device at a called electronic device while a call connection request of the calling electronic device is maintained according to various embodiments of the present disclosure; and
FIG. 12 illustrates a method for providing a communication service according to various embodiments of the present disclosure.

Throughout the drawings, it should be noted that like reference numbers are used to depict the same or similar elements, features, and structures.

### DETAILED DESCRIPTION OF EMBODIMENTS OF THE PRESENT INVENTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

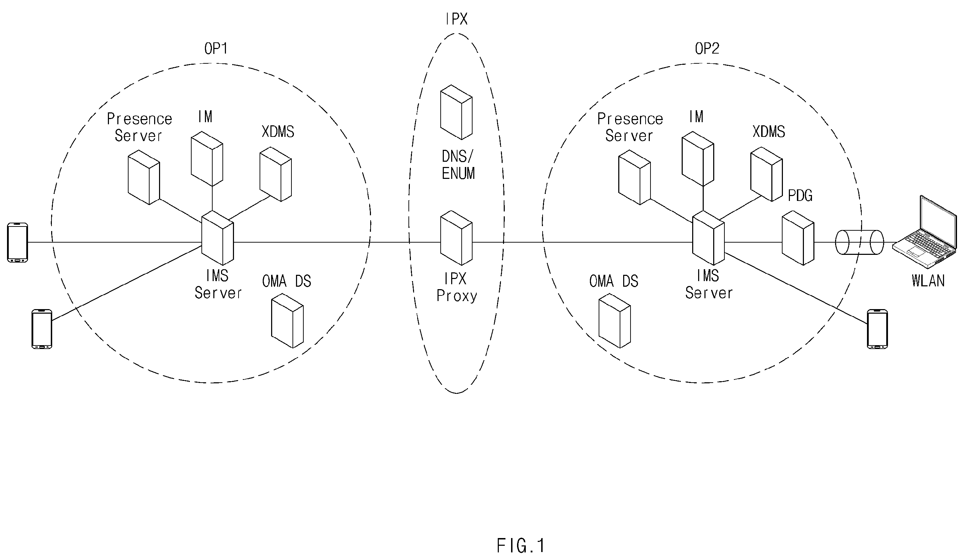

FIGURES 1 through12, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communication system.

Hereinafter, the present disclosure is described with reference to the accompanying drawings according to various embodiments of the present disclosure. Various modifications are possible in various embodiments of the present disclosure and embodiments are illustrated in drawings and related detailed descriptions are listed. However, the present disclosure is not intended to be limited to the specific embodiments, and it is understood that it should include various modifications, equivalents, and/or alternatives according to various embodiments of the present disclosure. With respect to the descriptions of the drawings, like reference numerals refer to like elements.

In the disclosure disclosed herein, the expressions "include" and "comprise", or "may include" and "may comprise" used herein indicate existence of disclosed corresponding functions, operations, or elements, and the like but do not exclude presence of additional one or more functions, operations, or elements, and the like. Also, it should be understood that the terms "include" and "comprise", "may include" and "may comprise", or "have" and "may have" used herein specifies existence of stated features, integers, operations, elements, components, or combinations thereof but do not preclude the presence or addition of one or more other features, integers, operations, elements, components, or combinations thereof.

The meaning of the expression "or" or "at least one of A or/and B" includes any or all combinations of words listed together with the expression. For example, the expression "A or B" or "at least one of A or/and B" may indicate A, B, or both A and B.

The expressions such as "1st", "2nd", "first", or "second", and the like used in various embodiments of the present disclosure may refer to various elements of various embodiments of the present disclosure, and may do not limit the corresponding elements. For example, such expressions do not limit the order and/or priority of the corresponding elements. The expressions may be used to distinguish one element from another element. For instance, both "a first user device" and "a second user device" indicate electronic devices and different user devices from each other. For example, without departing from the scope of the present disclosure, a first element may be referred to as a second element and vice versa.

It will be understood that when an element is referred to as being "connected to" or "coupled to" another element, it can be directly connected or coupled to the other element or an intervening element may be present. In contrast, when an element is referred to as being "directly connected to" or "directly coupled to" another element, it should be understood that there are no intervening element.

The terminology used herein is used to describe specified embodiments of the present disclosure and is not intended to limit the scope of the present disclosure. The terms of a singular form may include plural forms.

Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal detect unless expressly so defined herein in various embodiments of the present disclosure.

Hereinafter, a description will be given of an electronic device according to various embodiments of the present disclosure with reference to the accompanying drawings.

FIG. 1 illustrates a rich communication suite (RCS) network according to various embodiments of the present disclosure.

An internet protocol (IP) multimedia subsystem (IMS) server may provide multimedia services, such as a voice service, an audio service, a video service, and a data service, according to an IP in an RCS network of FIG. 1. In addition to the IMS server, OP1(operator 1) environment may comprise a Presence server, an Instant Messaging (IM) server, an XML (Extensible Markup Language) Document Management Server (XDMS), and an Open Mobile Alliance Data Synchronization (OMA DS) server. The Internetwork Packet Exchange (IPX) environment may comprise a Domain Name Server (DNS) / E. 164 number Mapping (ENUM) server, and an IPX proxy server. OP2 environment, similar to the OP1, may comprise a Presence server, an IM server, an XDMS, an OMA DS server, an IMS server, and Packet Data Gateway (PDB) connected to external user equipment via wireless local area network (WLAN).

The IMS server may use universal internet-based technologies and standardized network functions and may perform a session management function to be independent of an access network. Therefore, applications of different networks may easily interwork with each other in the RCS network. Accordingly, inter-service global interworking and conversion of wired and wireless networks may be improved.

The IMS server may support various wired and wireless integrated networks according to an IP network as well as interworking and conversion between different mobile communication systems in a wideband-code division multiple access (W-CDMA) network.

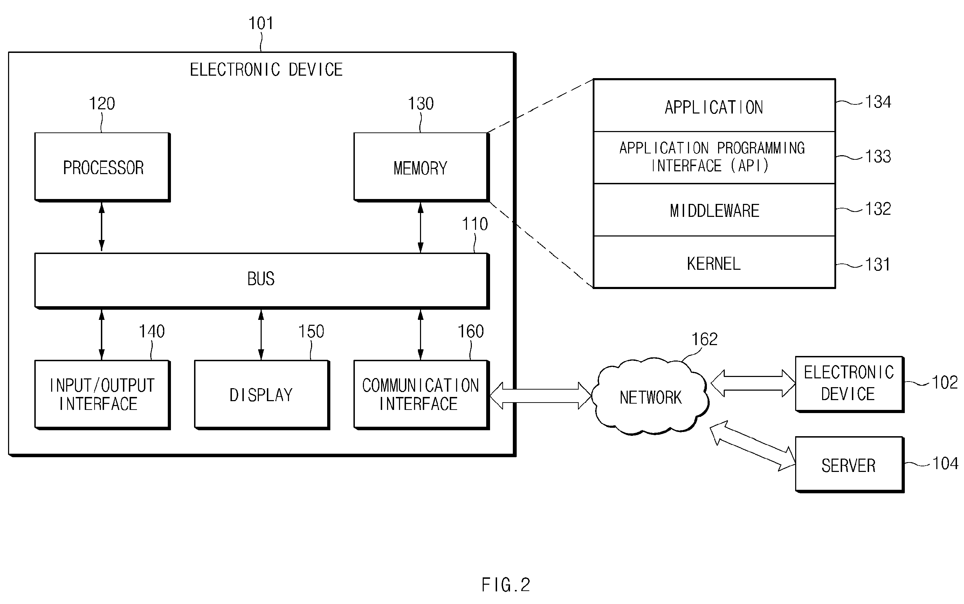

FIG. 2 illustrates an electronic device according to various embodiments of the present disclosure.

Referring to FIG. 2, an electronic device 101 may include a bus 110, a processor 120, a memory 130, an input and output interface 140, a display 150, and a communication interface 160.

The bus 110 may be a circuit which may connect the above-mentioned components with each other and may transmit communication (e.g., a control message) between the above-mentioned components.

The processor 120 may perform control to communicate multimedia data and input and output the multimedia data based on the multimedia data received from a calling electronic device.

The processor 120 may receive instructions from, for example, the above-mentioned other components (e.g., the memory 130, the input and output interface 140, the display 150, or the communication interface 160, and the like) through the bus 110, may decode the received instructions, and may perform calculation or data processing according to the decoded instructions.

The memory 130 may store instructions or data which are received from the processor 120 or other components (e.g., the input and output interface 140, the display 150, or the communication interface 160, and the like) or are generated by the processor 120 or the other components. The memory 130 may include programming modules, for example, a kernel 131, a middleware 132, an application programming interface (API) 133, or an application 134. The above-mentioned respective programming modules may be configured with software, firmware, hardware, or at least two or more combinations thereof.

The kernel 131 may control or manage system resources (e.g., the bus 110, the processor 120, or the memory 130, and the like) used to execute an operation or function implemented in the other programming modules, for example, the middleware 132, the API 133, or the application 134. Also, the kernel 131 may provide an interface which may access a separate component of the electronic device 101 in the middleware 132, the API 133, or the application 134 and may control or manage the separate component.

The middleware 132 may play a role as a go-between such that the API 133 or the application 134 communicates with the kernel 131 and transmits and receives data. Also, the middleware 132 may perform control (e.g., scheduling or load balancing) with respect to work requests using a method of assigning priority which may use system resources (the bus 110, the processor 120, or the memory 130, and the like) of the electronic device 101 to, for example, at least one of the application 134, in association with the work requests received from the application 134.

The API 133 may be an interface in which the application 134 controls a function provided from the kernel 131 or the middleware 132. For example, the API 133 may include at least one interface or function (e.g., instruction) for file control, window control, image processing, or text control, and the like.

According to various embodiments of the present disclosure, the applications 134 may include a short message service/multimedia message service (SMS/MMS) application, an e-mail application, a calendar application, an alarm application, a health care application (e.g., an application for measuring quantity of exercise or blood sugar, and the like), or an environment information application (e.g., an application for providing atmospheric pressure information, humidity information, or temperature information, and the like), and the like. Additionally or alternatively, the application 134 may be an application associated with exchanging information between the electronic device 101 and an external electronic device (e.g., an electronic device 102). The application associated with exchanging the information may include, for example, a notification relay application for transmitting specific information to the external electronic device or a device management application for managing the external electronic device.

For example, the notification relay application may include a function of transmitting notification information, which is generated by other applications (e.g., the SMS/MMS application, the e-mail application, the health care application, or the environment information application, and the like) of the electronic device 101, to the external electronic device (e.g., the electronic device 102). Additionally or alternatively, the notification relay application may receive notification information from, for example, the external electronic device (e.g., the electronic device 102), and may provide the received notification information to a user of the electronic device 101. For example, the device management application may manage (e.g., install, delete, or update) a function (e.g., a function of turning on/off the external electronic device itself (or partial components) or a function of adjusting brightness (or resolution) of a display) for at least a part of the external electronic device (e.g., the electronic device 102) which communicates with the electronic device 101, an application which operates in the external electronic device, or a service (e.g., a call service or a message service) provided from the external electronic device.

According to various embodiments of the present disclosure, the application 134 may include an application specified according to attributes (e.g., a kind of the electronic device) of the external electronic device (e.g., the electronic device 102). For example, if the external electronic device is an MP3 player, the application 134 may include an application associated with playing music. Similarly, if the external electronic device is a mobile medical device, the application 134 may include an application associated with health care. According to an embodiment of the present disclosure, the application 134 may include at least one of an application specified in the electronic device 101 and an application received from the external electronic device (e.g., a server 104 or the electronic device 102).

The input and output interface 140 may receive a user input corresponding to the multimedia data or may output the multimedia data while outputting a call connection request from the calling electronic device.

The input and output interface 140 may transmit instructions or data input from the user through an input and output device (e.g., a sensor, a keyboard, or a touch screen) to, for example, the processor 120, the memory 130, or the communication interface 160 through the bus 110. For example, the input and output interface 140 may provide data about a touch of the user, which is input through the touch screen, to the processor 120. Also, the input and output interface 140 may output instructions or data received from, for example, the processor 120, the memory 130, or the communication interface 160 through the bus 110, through the input and output device (e.g., a speaker or the display 150). For example, the input and output interface 140 may output voice data processed through the processor 120 to the user through the speaker.

The display 150 may display a variety of information (e.g., multimedia data, or text data, and the like) to the user.

The communication interface 160 may receive a call connection request from a first electronic device through a communication channel connected on a packet-switched (PS) network and may communicate multimedia data with the first electronic device through the communication channel while the call connection request is maintained.

The communication interface 160 may perform communication between the electronic device 101 and the external electronic devices (e.g., the electronic device 102 or the server 104). The communication interface 160 may receive an application from the external electronic device (e.g., the electronic device 102 or the server 104).

For example, the communication interface 160 may connect to a network 162 through wireless communication or wired communication and may communicate with the external electronic device. The wireless communication may include at least one of, for example, wireless-fidelity (Wi-Fi) communication, Bluetooth (BT) communication, near field communication (NFC), global positioning system (GPS) communication, and cellular communication (e.g., long term evolution (LTE), LTE-advanced (LTE-A), code division multiple access (CDMA), wideband CDMA (WCDMA), universal mobile telecommunications system (UMTS), wireless broadband (WiBro), or global system for mobile communications (GSM), and the like). The wired communication may include at least one of, for example, universal serial bus (USB) communication, high definition multimedia interface (HDMI) communication, recommended standard 232 (RS-232) communication, or plain old telephone service (POTS) communication.

According to an embodiment of the present disclosure, the network 162 may be a telecommunications network. The telecommunications network may include at least one of a computer network, the Internet, the Internet of things, or a telephone network. According to an embodiment of the present disclosure, protocols (e.g., a transport layer protocol, a data link layer protocol, or a physical layer protocol) for communication between the electronic device 101 and the external electronic device may be supported in at least one of the application 134, the API 133, the middle ware 132, the kernel 131, or the communication interface 160.

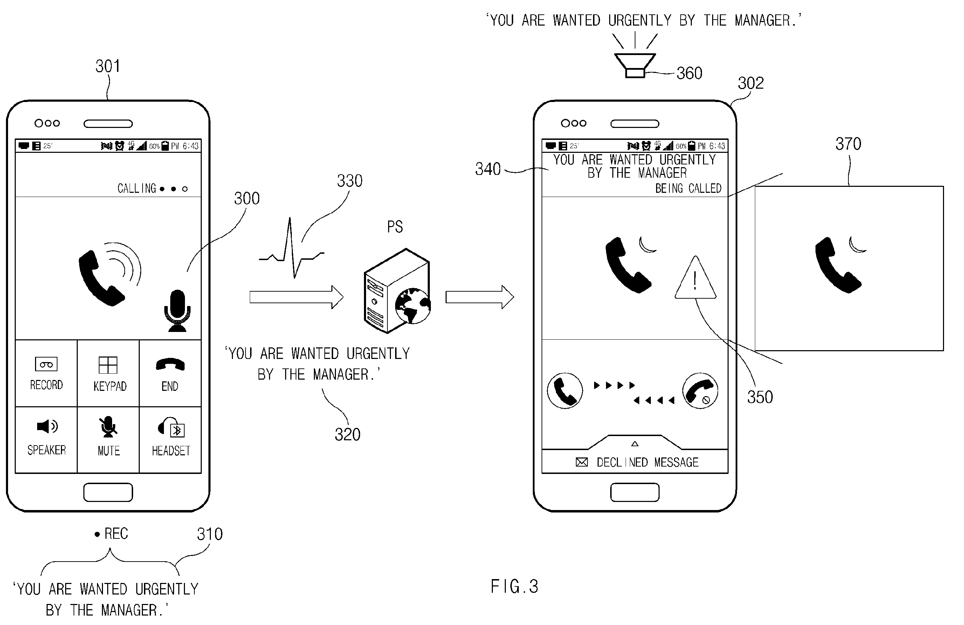

FIG. 3 illustrates an operation of transmitting multimedia data to a called electronic device at a calling electronic device during a call connection request according to various embodiments of the present disclosure.

According to various embodiments of the present disclosure, after a calling party A (e.g., user A) (or an electronic device (i.e., a calling electronic device 301) of the calling party A) may transmit a call connection request to an electronic device (i.e., a called electronic device 302) of a called party B (e.g., user B), before the called party B accepts the call connection request of the calling party A, the electronic device of the calling party A may transmit multimedia data to the electronic device of the called party B during the call connection request. The multimedia data may be at least one of text, a voice, an image, or a video.

For example, the calling party A may transmit his or her intention associated with the call connection request to the called party B using the multimedia data during the call connection request. For example, the electronic device of the calling party A may transmit multimedia data, such as text, a voice, and an emoticon, for indicating a reason of the call connection request, urgency of the call connection request, and the like, during the call connection request to the electronic device of the called party B. The calling electronic device 301 may transmit multimedia data to the called party electronic device during the call connection request to help the called party B to determine whether to accept a call connection request of the calling party A. According to various embodiments of the present disclosure, the calling electronic device 301 may directly transmit multimedia data to the called party electronic device. Alternatively, the calling electronic device 301 may transmit multimedia data to the called party electronic device through a server.

According to various embodiments of the present disclosure, the calling electronic device 301 may transmit multimedia data input by the calling party A to the electronic device of the called party B without change during a call connection request, or may convert a data type of multimedia data input by the calling party A and may transmit the converted multimedia data to the electronic device of the called party B during a call connection request. For example, the calling electronic device 301 may directly convert a data type of input multimedia data and may transmit the converted multimedia data to the called electronic device. Alternatively, a server may convert a data type of multimedia data received from the calling electronic device 301 and may transmit the converted multimedia data to the called electronic device. Alternatively, the called electronic device may directly convert a data type of multimedia data received from the calling electronic device 301 and may output the converted multimedia data.

For example, the calling electronic device 301 may transmit voice data input by the calling party A to the electronic device of the called party B without change while transmitting a call connection request to the called electronic device. Alternatively, the calling electronic device 301 may convert voice data input by the calling party A into text data and may transmit the converted text data to the electronic device of the called party B.

For example, when attempting to establish a call connection with the called party B, the calling party A may tell the called party B that 'you are wanted urgently by the manager' with his or her voice in a state where a ring-back tone rings to the called party B. Alternatively, the calling party A may directly enter the text that 'you are wanted urgently by the manager' in a state where a ring-back tone rings to the called party B.

The calling electronic device 301 may transmit multimedia data input by the user A to the called electronic device without change. Alternatively, the calling electronic device 301 may convert a data type of the multimedia data and may transmit the converted multimedia data to the called electronic device.

For example, the calling electronic device 301 may receive the voice input 310 of the calling party A that 'you are wanted urgently by the manager' and may transmit voice data 330 to the called electronic device 302 without change. Alternatively, the calling electronic device 301 may convert the voice input 310 that 'you are wanted urgently by the manager' into the text 320 that 'you are wanted urgently by the manager' and may transmit the converted text 320 to the called electronic device.

The calling electronic device 301 may determine whether to convert a data type based on designation or settings of a user or may automatically determine whether to convert a data type based on input data, status information of a called party, or a communication environment, and the like. For example, if a user input corresponding to the multimedia data is received during a call connection request, the calling electronic device 301 may provide a menu or an icon 300 for converting a data type, may convert a data type of the input data into a predetermined data type in response to an input on the menu or the icon 300, and may transmit the converted data to the called electronic device 302.

Alternatively, if a user input corresponding to the multimedia data is received during a call connection request, the calling electronic device may parse the received data, may convert the received data into data of a data type which is the most suitable for contents of the received data, and may transmit the converted data to the called electronic device. For example, if a voice input of the user is received during a call connection request, the calling electronic device may parse information, such as intonations, tones, and words, from the voice input, and may convert a data type of the voice input into the most effective data type based on the parsed contents.

Alternatively, if a user input corresponding to the multimedia data is received during a call connection request, the calling electronic device 301 may determine a communication environment, may convert a data type of the multimedia data into a data format which is the most suitable for the communication environment, and may transmit the converted data to the called electronic device 302. For example, if determining that a communication environment is poor, the calling electronic device 300 may convert the multimedia data into text having the least data capacity.

Alternatively, if a user input corresponding to the multimedia data is received during a call connection request, the calling electronic device may verify status information of a called party, may convert the multimedia data into data of a data type which is the most suitable for the status information of the called party, and may transmit the converted data to the called electronic device.

The called electronic device may transmit multimedia data transmitted from the calling electronic device to the called party without change. Alternatively, the called electronic device may process a form, a color, and the like of the multimedia data in a different way and may provide the processed multimedia data to the called party. For example, if receiving the voice data 330 from the calling electronic device 301, the called electronic device 302 may output a voice 360 of the calling party A that 'you are wanted urgently by the manager' without change. Alternatively, the called electronic device 302 may convert a data type of the received voice data 330 into a text type that 'you are wanted urgently by the manager', and may output the converted text 340. Alternatively, if multimedia data are received from the calling electronic device 301, the called electronic device 302 may parse the multimedia data and may output an emoticon 350 or an image, and the like suitable for contents of the received data on an output screen for providing notification of a call connection request. Alternatively, the called electronic device 302 may output the output screen, for providing the notification of the call connection request, as an expanded screen 370 based on urgency of the contents of the received data.

According to various embodiments of the present disclosure, the called electronic device 302 may replace a bell sound of the called electronic device 302 with received voice data and may output the received voice data.

According to various embodiments of the present disclosure, when the calling party A attempts to establish a call connection with the called party B, if the called party B does not receive a telephone call during a constant time or more (e.g., 20 seconds or more), the called electronic device 302 may change a vibration mode to a vibration and notification sound mode. In addition, if the called party B does not receive a telephone call some more during a constant time (e.g., 10 seconds or more), the called electronic device 302 may change the vibration and notification sound mode to a notification sound mode and may gradually increase a notification sound.

If determining that multimedia data received from the calling electronic device indicate an urgent situation, the called electronic device 302 may automatically change a vibration mode to a notification sound after vibration mode or a notification sound mode. Also, the called electronic device 302 may display notification of a call connection request from the calling electronic device through an additional method such as a light emitting diode (LED). Alternatively, the called electronic device 302 may change a notification option of a missed call based on received multimedia data. For example, the called electronic device 302 may change the notification option of the missed call to a periodic vibration mode for periodically providing notification of vibration or may set a period to be shorter.

According to various embodiments of the present disclosure, notification settings based on multimedia data in the called electronic device may not be changed based on settings of the called electronic device. Alternatively, although notification settings are changed in the called electronic device, the notification settings may be changed to a level set in the called electronic device.

According to various embodiments of the present disclosure, in a method for providing a communication service, the called electronic device 302 may receive a call connection request from the calling electronic device 301 through a communication channel connected through a packet-switched (PS) network, may receive multimedia data from calling electronic device through the communication channel while the call connection request is maintained, and may additionally output the multimedia data on an output screen for providing notification of the call connection request.

According to various embodiments of the present disclosure, the called electronic device 302 may change at least one of a color, a position, a size, or a form of at least a part of an output screen of providing notification of the call connection request according to the multimedia data and may output the multimedia data on the changed output screen.

According to various embodiments of the present disclosure, the called electronic device 302 may output the multimedia data or data, into which the multimedia data are converted, as a bell sound of the called electronic device.

According to various embodiments of the present disclosure, the called electronic device may convert a data type of the multimedia data and may output the converted multimedia data.

According to various embodiments of the present disclosure, the called electronic device may convert the data type according to settings of the called electronic device.

According to various embodiments of the present disclosure, the called electronic device may change a notification way of a call connection request of the called electronic device based on multimedia data received from the calling electronic device.

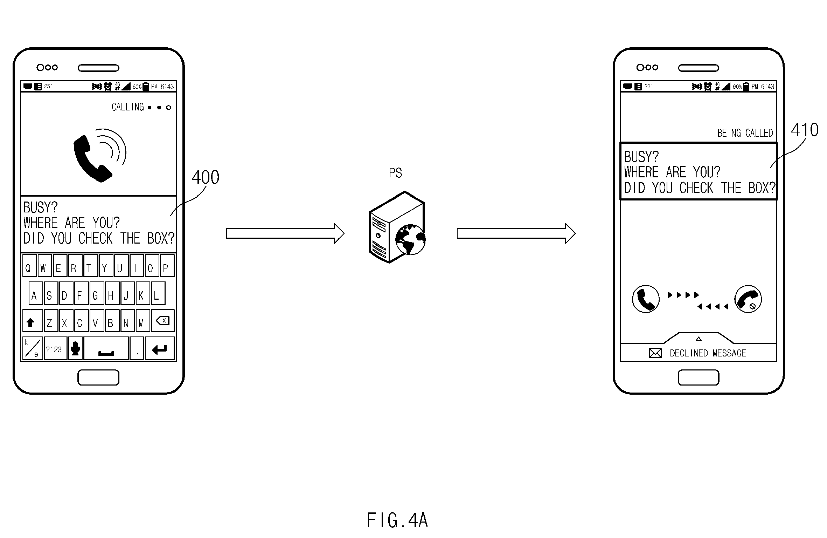

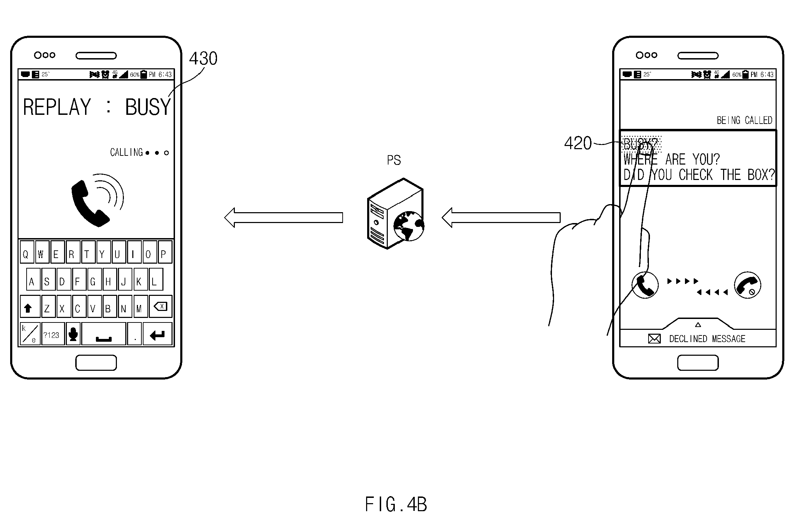

FIGS. 4A and 4B illustrate an operation of transmitting multimedia data to a called electronic device at a calling electronic device during a call connection request according to various embodiments of the present disclosure.

According to various embodiments of the present disclosure, the calling electronic device may transmit at least one of text, a voice, an image, or the like for inquiring a state of a called party's device while making a call to the called party.

According to various embodiments of the present disclosure, the called electronic device may receive a user input for selecting at least a part of the multimedia data displayed on an output screen for providing notification of a call connection request and may transmit the selected multimedia data to the calling electronic device in response to the user input, while the call connection request is maintained.

For example, as shown in FIG. 4A, when a calling party A attempts to establish a call connection with a called party B, if the called party B does not receive a telephone call, the calling party A may write three text messages 400 (for example, (i)'busy?', (ii) 'where are you?', and (iii) 'did you check the box?') and may transmit the three text messages to the called electronic device. The called electronic device may display the three text messages transmitted by the calling party A on its screen 410 without change. As shown in FIG. 4B, the called party B may click the text message 420 of 'busy?' among the three text messages transmitted by the calling party A, may remove the text message of '?', and may transmit a text message 430 of 'busy' to the calling party A.

The called electronic device may display a response to be transmitted to the calling electronic device, in which 'an item on 'busy?' is selected', as a form in which it is easy to be understood by the calling party B.

Therefore, although a call connection is not established between the called electronic device and the calling electronic device, the called electronic device and the calling electronic device may simply communicate intentions to be transmitted.

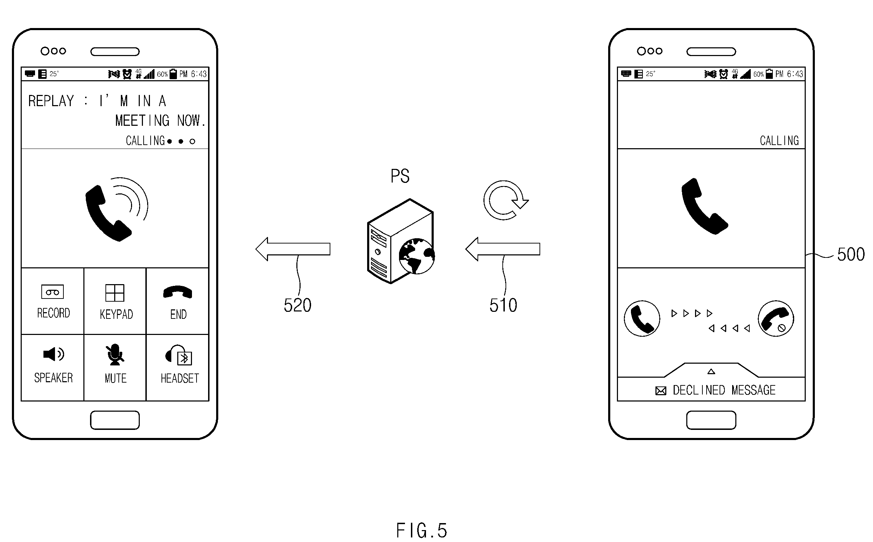

FIG. 5 illustrates an operation of setting a fake call option in a called electronic device at a calling electronic device according to various embodiments of the present disclosure.

Although a calling party A transmits a call connection request to a called party B, if the called party does not accept a telephone call, the call connection request of the calling party A may be displayed as a missed call on an electronic device of the called party B. According to various embodiments of the present disclosure, the calling party A may set a fake call option for the electronic device of the called party B to be called.

According to the fake call option, if it is in a situation where the called party B may receive a telephone call, the electronic device of the called party B may output a notification of a call connection request from the calling party A on its screen 500 as if the called party B receives a telephone call from the calling party A. Also, the call connection request may be transmitted to the electronic device of the calling party A (refer to reference numbers 510 and 520). Therefore, the electronic device of the calling party A and the electronic device of the called party B may establish a call connection. As if the electronic device of the called party B receives a call connection request from the electronic device of the calling party A according to the fake call option, the electronic device of the called party B may output notification of the call connection request and may simultaneously transmit the call connection request to the electronic device of the calling party A.

If receiving a request for setting the fake call option from the electronic device of the calling party A, the electronic device of the called party B may determine timing or a time to establish a call connection with the electronic device of the calling party A in response to the request. For example, the electronic device of the called party B may determine connection timing for the fake call option based on a user input, sensor data sensed by at least one or more sensors attached to the electronic device, user information or user settings stored in the electronic device. For example, if the electronic device of the called party B is unlocked, the electronic device of the called party B may determine that the current situation is a situation at which time the called party B may establish a call connection with the calling party A and may attempt to establish a call connection with the electronic device of the calling party A. Alternatively, if verifying movement of a predetermined distance or more through at least one of sensors included in the electronic device of the called party B, the electronic device of the called party B may establish a call connection with the electronic device of the calling party A. Alternatively, the electronic device of the called party B may determine timing to establish a call connection with the electronic device of the calling party A based on user information such as a schedule set by the called party B.

The called party B may set his or her electronic device in advance not to operate a fake call option. For example, when receiving a request for a fake call option from the electronic device of the calling party A, if a fake call option denial is set in advance in the electronic device of the called party B, the electronic device of the called party B may inform the electronic device of the calling party A that the fake call option may not be performed.

According to various embodiments of the present disclosure, the called electronic device may receive a request for setting a fake call option from the calling electronic device and may set the fake call option. If timing to establish a call connection with the calling electronic device is reached, the called electronic device may transmit a call connection request to the calling electronic device and may output notification of the call connection request.

According to various embodiments of the present disclosure, the timing to establish the call connection may be determined based on at least one of a user input of the called electronic device, data of at least one or more sensors attached to the called electronic device, or user information or user settings stored in the called electronic device.

According to various embodiments of the present disclosure, the called electronic device may request a server, which performs a call connection between the calling electronic device and the called electronic device, to end an attempt to establish a call connection for the call connection request while maintaining a virtual ring-back tone to the calling electronic device. The called electronic device may maintain a virtual ring-back tone to the calling electronic device through the server and may receive a user input. The called electronic device may end the virtual ring-back tone to the calling electronic device through the server and may transmit multimedia data corresponding to the user input to the calling electronic device.

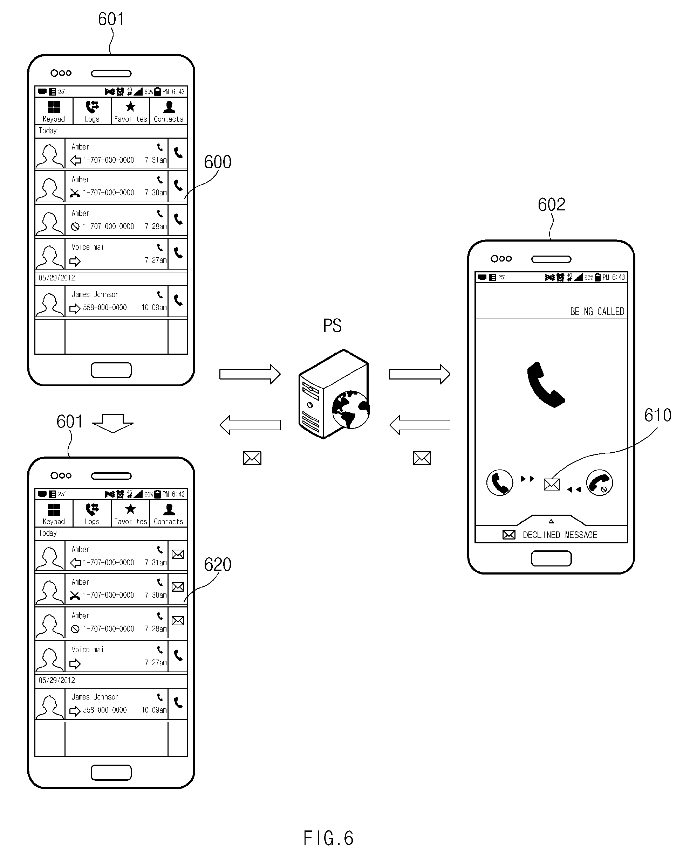

FIG. 6 illustrates an operation of displaying an optimum communication means of a called electronic device 602 on a call list screen of a calling electronic device 601 based on the optimum communication means which is available in the called electronic device according to various embodiments of the present disclosure.

When the calling electronic device transmits a call connection request to the called electronic device, if the called party may not accept the call connection request of a calling party and may perform communication through another communication means (e.g., a messenger, a short message service (SMS) message, an email, and the like), the called electronic device may inform the calling electronic device of the other communication means. The calling electronic device may change and display at least one of a position, a size, a form, or a color of a call list screen based on the optimum communication means which is available in the called electronic device.

For example, the called party may want to change a communication means to a message 610 with respect to a call connection request of the calling party and to perform communication. The called electronic device may receive an input for requesting the called electronic device to change the communication means to the message 610 from the called party with respect to a received call connection request and may transmit a communication means change request, for requesting the calling electronic device to communicate through a message, to the calling electronic device. Therefore, the calling electronic device 601 may change a basic call icon 600 previously displayed on the call list screen to a message icon 620 based on the communication means change request transmitted from the called electronic device 610 and may display the changed message icon 620.

According to various embodiments of the present disclosure, if the call connection request is ended in the called electronic device, the called electronic device may transmit a communication means requested by the called electronic device to the calling electronic device.

According to various embodiments of the present disclosure, the calling electronic device may receive an optimum communication means which is available in the called electronic device, may change at least one of a color, a position, a size, or a form of at least a part of the call list screen of the calling electronic device, and may display the optimum communication means of the called electronic device.

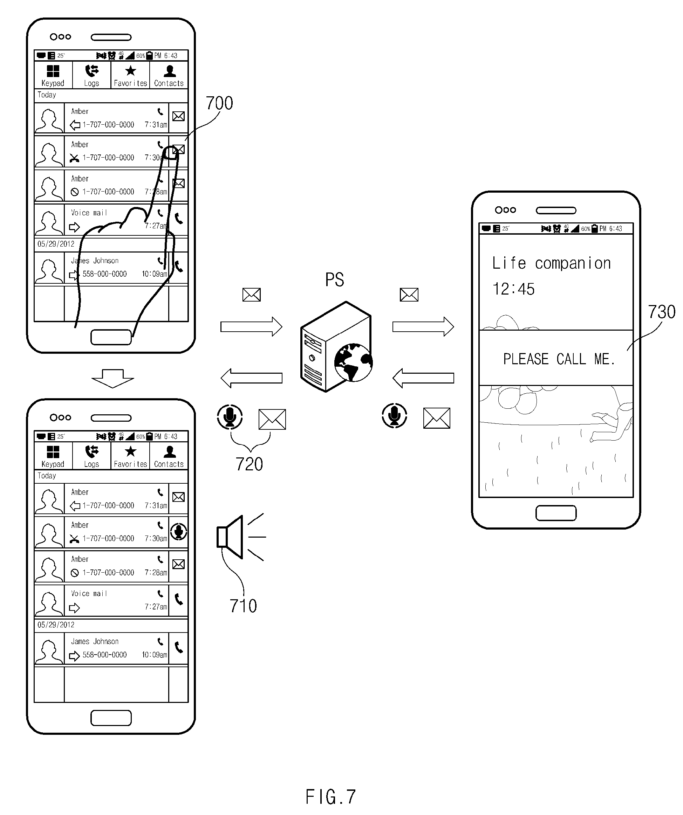

FIG. 7 illustrates an operation of converting input multimedia data based on an optimum communication means which is available in a called electronic device and transmitting the converted multimedia data to the called electronic device at a calling electronic device according to various embodiments of the present disclosure.

If a calling party uses another communication means rather than a communication means requested by the called electronic device, the calling electronic device may convert data input with a data type the calling party wants into data of a data type corresponding to the communication means requested by the called electronic device and may transmit the converted data to the called electronic device. For example, although the communication means requested by the called electronic device is a message, there may be a possibility that the calling party will prefer a voice-based communication means to a text-based communication means which is a message or a possibility that the calling party may use only the voice-based communication means. As described with reference to FIG. 6, the calling electronic device may replace an icon indicating a communication means with the called party with a message icon 700 based on a communication means received from the called electronic device and may display the message icon 700 on a call list screen of the calling electronic device. For example, if a voice 710 is input from the calling party, the calling electronic device may convert the input voice 710 into a voice mail, may convert the voice mail into a message 720 based on a communication means requested by the called electronic device, and may transmit the converted message 730 to the called electronic device.

According to various embodiments of the present disclosure, the calling electronic device may receive an optimum communication means which is available in the called electronic device and may convert a data type of multimedia data input by the calling party based on the optimum communication means which is available in the called electronic device.

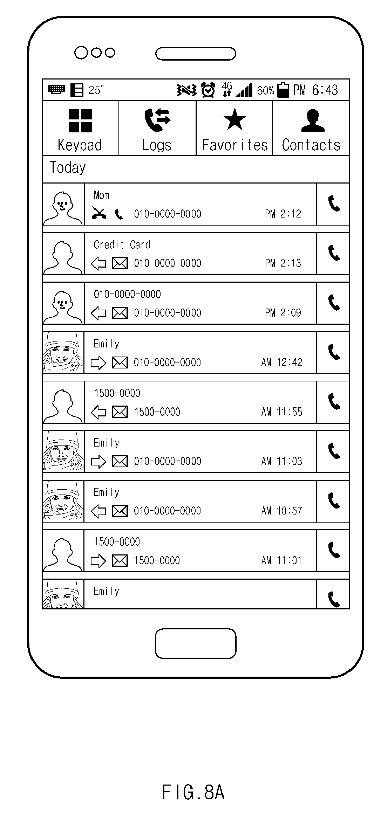

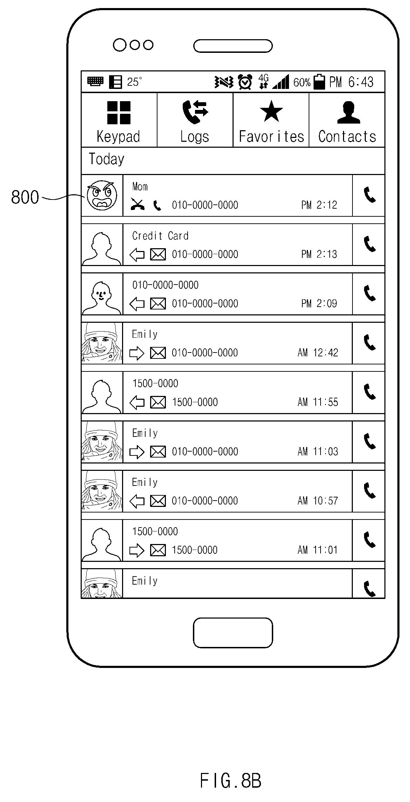

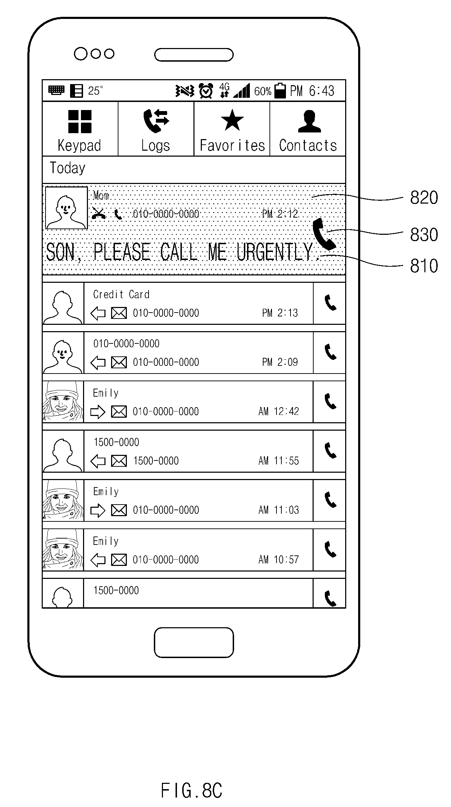

FIGS. 8A, 8B, and 8C illustrate an operation of additionally outputting multimedia data received from a calling electronic device on an output screen for providing notification of a missed call at a called electronic device according to various embodiments of the present disclosure.

According to various embodiments of the present disclosure, the called electronic device may display multimedia data, transmitted when a calling party transmits a call connection request to a called party or after a missed call is generated, as various data types such as text and a voice together with missed call notification on a screen which displays the missed call notification.

When the calling party transmits a call connection request to the called party or after a missed call is generated, the calling electronic device may transmit multimedia data, such as text, a voice, an image, and a video with respect the purpose of calling party's phone call to the called electronic device. The called electronic device may display multimedia data, transmitted when a calling party A transmits a call connection request to a called party B or after a missed call is generated, as various data types such as text or a voice together with missed call notification on a call list. Alternatively, the called electronic device may display multimedia data, transmitted when the calling party A transmits a call connection request to the called party B or after a missed call is generated, as various data types such as text or a voice together with missed call notification on a lock screen or a notification region (e.g., a notification bar) located at an upper end of a screen.

The called electronic device may change a calling party ID for a calling party of a missed call to another emoticon, video, avatar, or multimedia data and may display the changed data on various application screens (e.g., a call list) of the called electronic device. For example, compared with FIG. 8A, it may be known that a calling party ID of 'Mom' who is a calling party of a missed call is changed to an emoticon 800 of an angry face in FIG. 8B.

When a missed call is generated, the called electronic device may change at least one of a position, a size, a form, or a color of a screen and may display multimedia data 810 or additional information about the missed call transmitted from the calling electronic device on the changed screen which displays missed call notification. For example, as shown in FIG.8C, the called electronic device may change and display a color of an item 820 corresponding to a calling party of a missed call on a call list, may expand and display an icon 830 of a call button, or may expand and display a region corresponding to the item 820 of the calling party of the missed call on the call list. Therefore, the called electronic device may emphasize missed call notification to the called party.

According to various embodiments of the present disclosure, the called electronic device may change at least one of a color, a position, a size, or a form of at least a part of an output screen for providing notification of a missed call according to the multimedia data received from the calling electronic device and may display the multimedia data on the changed output screen.

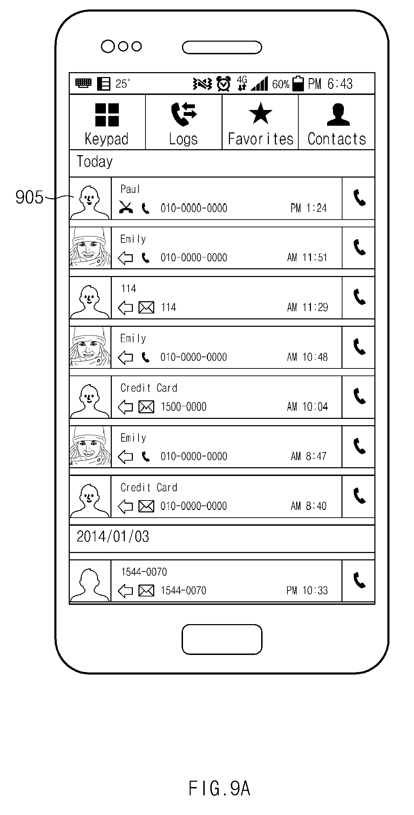

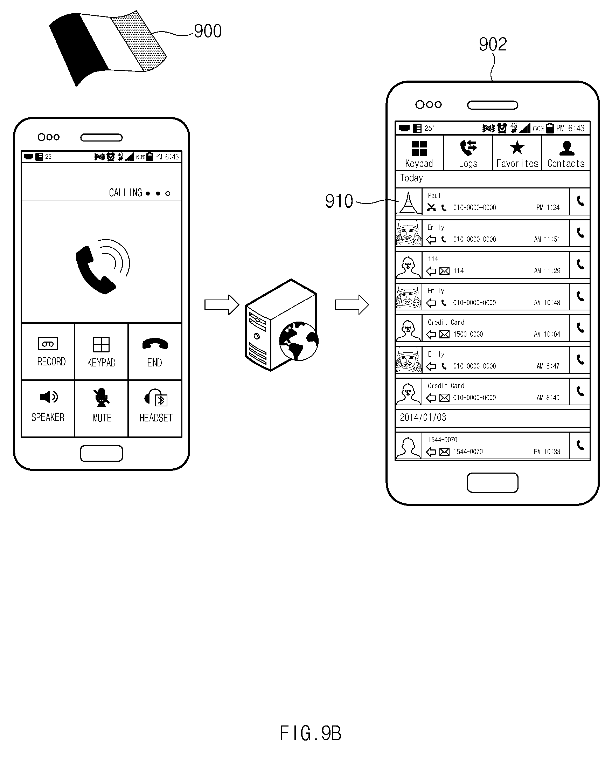

FIGS. 9A and 9B illustrate an operation of outputting status information of a calling electronic device, which is obtained based on a call connection request of the calling electronic device, at a called electronic device according to various embodiments of the present disclosure.

According to various embodiments of the present disclosure, the called electronic device may obtain status information of a calling party based on information (hereinafter referred to as "call connection information") about a call connection request of the calling party and may reflect the status information of the calling party to a call list of a called party. The call connection information may be obtained through a server which provides a communication service. The status information of the calling party may be information which may be obtained within a range of the call connection information which may be obtained through the server. The status information of the calling party may correspond to indirect information which is not directly provided from the calling electronic device. For example, the status information of the calling party may be location information of the calling party and the like.

For example, after a calling party A transmits a call connection request to a called party B in France 900, if a missed call is generated, the called electronic device may verify that the calling party A made the telephone call to the called party B from France 900 based on the call connection information. For example, the called electronic device 902 may replace an icon 905 indicating a calling party ID of the calling party A, displayed as a missed call on a call list, with an Eiffel Tower icon 910 indicating France and may display the Eiffel Tower icon 910. The operation of reflecting of the status information of the calling party to the call list of the called party may be applied, if the status information of the calling party is verified or if the calling party sets the operation as an option.

According to an embodiment of the present disclosure, although a missed call is generated, the called party may verify status information of the calling party. When requesting the calling party to establish a call connection for a missed call, the called party may refer to the status information of the calling party.

For example, after the calling party A transmits a call connection request to the called party B, an electronic device of the called party B may verify that the calling party A is in France through information associated with the calling party A and may change at least a part of data associated with the calling party A to data associated with France 900. For example, the electronic device 902 of the called party B may recognize that the calling party A is in France 900 through call connection roaming information of the calling party A or may recognize that the calling party A is in France 900 based on location information among data which are uploaded to a social network service (SNS) by the calling party A before and after the called party B transmits a call connection request to the calling party A, and may replace an icon 905 of telephone book information of the calling party A with the Eiffel Tower icon 910 and may display the Eiffel Tower icon 910.

According to various embodiments of the present disclosure, if a call connection request of the calling electronic device is ended, the called electronic device may receive status information of the calling electronic device from a server which performs a call connection between the calling electronic device and the called electronic device and may additionally output the status information of the calling electronic device on an output screen for providing notification of a missed call.

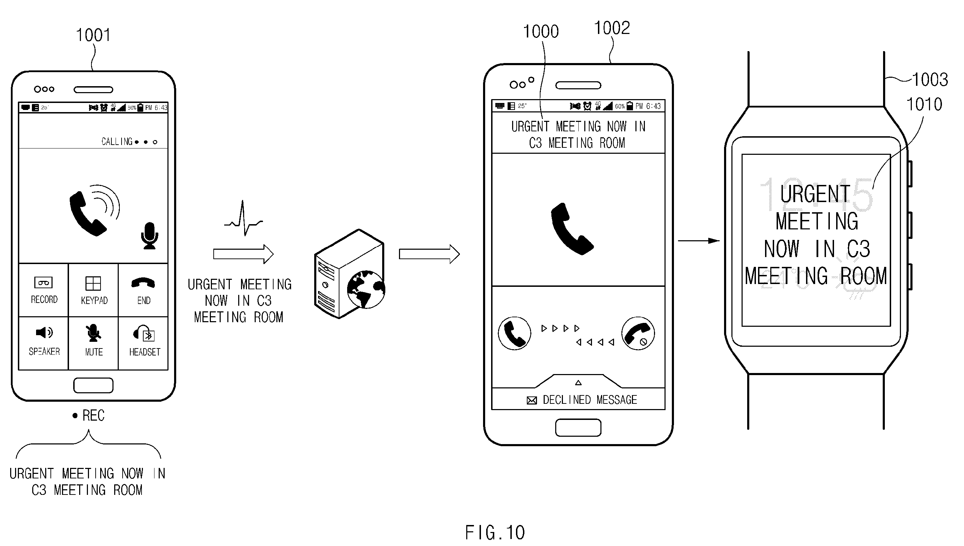

FIG. 10 illustrates an operation of outputting multimedia data received from a calling electronic device at an electronic device functionally connected with a called electronic device according to various embodiments of the present disclosure.

According to various embodiments of the present disclosure, an electronic device functionally connected with the called electronic device may output multimedia data received from the calling electronic device. For example, the electronic device functionally connected with the called electronic device may be a wearable device. Hereinafter, for convenience of description, the electronic device functionally connected with the called electronic device will be described as a wearable electronic device.

For example, the called electronic device 1002 may transmit multimedia data 1000 received from the calling electronic device 1001 to a wearable electronic device 1003 such as a smart watch. The wearable electronic device may display multimedia data transmitted from the calling electronic device as a semitransparent overlay form 1010 on a screen of the wearable electronic device.

According to various embodiments of the present disclosure, if the wearable electronic device is distant out of a communication range and is approached again within the communication range, the called electronic device may display multimedia data received while the wearable electronic device is located out of the communication range. The order of displaying the multimedia data may be displayed according to priority or urgency, according to contents of the multimedia data.

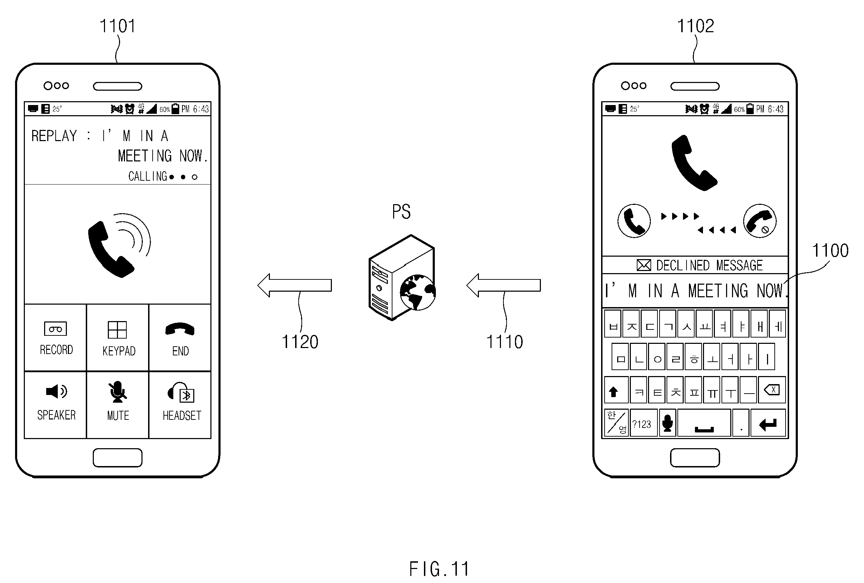

FIG. 11 illustrates an operation of transmitting multimedia data to a calling electronic device at a called electronic device while a call connection request of the calling electronic device is maintained according to various embodiments of the present disclosure.

According to various embodiments of the present disclosure, the called electronic device may not accept a call connection request and may transmit multimedia data, such as text, a voice, an icon, an image, and a video, to the calling electronic device during the call connection request. While the call connection request is maintained in the calling electronic device, the called electronic device 1102 may end notification of the call connection request of the calling electronic device, may receive a user input from a called party, and may transmit multimedia data corresponding to the user input to the calling electronic device (refer to reference numbers 1110 and 1120). The called electronic device 1102 may end the call connection request of the calling electronic device 1101 together with transmitting the multimedia data 1110 and 1120. Therefore, after the call connection request is ended, a calling party may verify multimedia data transmitted by the called party.

For one example, although the called party pushes an end button, the called electronic device 1102 may (i) receive multimedia data, such as a voice and text, from the called party in a state where a call connection request is not actually ended and only notification of the call connection request is ended; (ii) transmit the multimedia data 1120 and 1110 to the called party, and (iii) actually end the call connection request. Therefore, it may be prevented from being charged while a ring-back tone according to outbound roaming is maintained.

For another example, if a call connection request continues during a constant time or more (e.g., ten seconds or more), the called electronic device may end the call connection request and may transmit instructions or data to the calling electronic device such that a virtual ring-back tone is maintained in the calling electronic device. While the virtual ring-back tone is maintained in the calling electronic device, the called electronic device may transmit multimedia data the called party wants to transmit to the calling party.

According to various embodiments of the present disclosure, after the call connection request is ended, if a user input is received within a predetermined time (e.g., ten seconds), the called electronic device may transmit the multimedia data to the calling electronic device.

After a call connection is ended, if the calling party inputs multimedia data such as text, a voice, an icon, an image, and a video within a constant time (e.g., ten seconds), the called party may transmit multimedia data to the calling party without originating a call again or transmitting a text message using the same communication channel within a constant time immediately after the call connection is ended. For example, if a calling party A makes a telephone call to a called party B and the called party B does not receive the telephone call, before or as soon as a call connection is ended, the called party B may push a voice information sending button and may transmit multimedia data to the calling party A.

For example, if the calling party A makes a telephone call to the called party B and the called party B does not receive the telephone call because of education, the called party B may push a call connection end button and may simultaneously record the reason that 'I'll call you later because of education' through a record application. The calling electronic device may receive the reason that 'I'll call you later because of education' rather than a previously stored call end sound and may end the telephone call. Alternatively, the calling electronic device may execute recorded contents after a call end sound is generated.

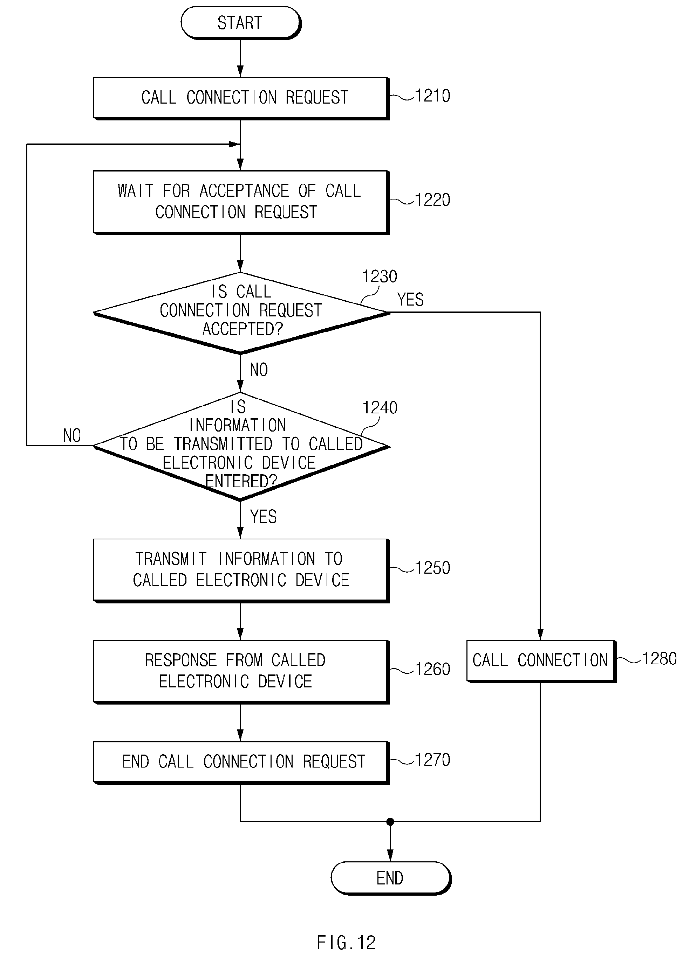

FIG. 12 illustrates a method for providing a communication service according to various embodiments of the present disclosure.

Referring to FIG. 12, a method for providing a communication service in FIG. 12 may include operations processed in an electronic device 101 shown in FIG. 1. Therefore, although there may omitted contents in various embodiments of the present disclosure, contents described above about the electronic device 101 may be applied to the method described with reference to FIG. 12.

In operation 1210, a calling electronic device may transmit a call connection request to a called electronic device.

In operation 1220, the calling electronic device may be in a state of waiting for acceptance of the call connection request, while maintaining the call connection request to the called electronic device.

In operation 1230, the calling electronic device may determine whether the called electronic device accepts the call connection request. If the called electronic device accepts the call connection request, the calling electronic device may perform operation 1280. If the called electronic device does not accept the call connection request, the calling electronic device may perform operation 1240.

In operation 1240, the calling electronic device may determine whether to enter information to be transmitted to the called electronic device. If the information is entered, the calling electronic device may perform operation 1250. If the information is not entered, the calling electronic device may return to operation 1220. The calling electronic device may transmit information, associated with the call connection request, to the called electronic device during waiting for accepting the call connection request.

In operation 1250, the calling electronic device may transmit information to the called electronic device. Therefore, the called electronic device may output information, associated with the call connection request, on at least a part of an output screen for providing notification of the call connection request.

In operation 1260, the calling electronic device may receive a response from the called electronic device. The called electronic device may transmit a response, to the information associated with the call connection request received from the calling electronic device, to the calling electronic device. Information about the response transmitted to the calling electronic device may be information newly entered in the called electronic device by the called party or may be partial information selected among information received from the calling electronic device.

In operation 1270, the calling electronic device may end the call connection request.

In operation 1280, the calling electronic device may establish a call connection with the called electronic device.

The terminology "module" used herein may mean, for example, a unit including one of hardware, software, and firmware or two or more combinations thereof. The terminology "module" may be interchangeably used with, for example, terminologies "unit", "logic", "logical block", "component", or "circuit", and the like. The "module" may be a minimum unit of an integrated component or a part thereof. The "module" may be a minimum unit performing one or more functions or a part thereof.

According to various embodiments of the present disclosure, at least a part of the electronic device (e.g., modules or the functions) or the method (e.g., operations) may be implemented with, for example, instructions stored in a computer-readable storage media which has a program module. When the instructions are executed by one or more processors, the one or more processors may perform functions corresponding to the instructions.

The computer-readable storage media may include magnetic media, such as a hard disc, a floppy disk, and a magnetic tape; optical media, such as a compact disc read only memory (CD-ROM) and a digital versatile disc (DVD); magneto-optical media, such as a floptical disk; and a hardware device, such as a ROM, a random access memory (RAM), a flash memory, and the like, which is particularly configured to store and perform program instructions (e.g., program modules). Also, the program instructions may include not only mechanical codes compiled by a compiler but also high-level language codes which may be executed by a computer using an interpreter and the like. The above-mentioned hardware device may be configured to operate as one or more software modules to perform operations according to various embodiments of the present disclosure, and vice versa.

According to various embodiments of the present disclosure, in computer-readable storage media which store instructions, the instructions may be set to allow at least one processor to perform at least one operation when being executed by the at least one processor. The at least one operation may include an operation of receiving a call connection request from a calling electronic device through a communication channel connected on a packet-switched (PS) network, an operation of receiving multimedia data from the calling electronic device through the communication channel while the call connection request is maintained, and an operation of additionally outputting the multimedia data on an output screen for providing notification of the call connection request.

The at least one operation according to various embodiments of the present disclosure may include an operation of transmitting a call connection request to a called electronic device through a communication channel connected on a PS network, an operation of receiving a user input while the call connection request is maintained, and an operation of transmitting multimedia data corresponding to the user input to the called electronic device through the communication channel.

According to various embodiments of the present disclosure, the electronic device may transmit an intention of a calling party or a called party through a communication means the calling party or the called party wants during a call connection request or if a missed call is generated or may provide an additional service in connection with status information of the calling party or the called party. Therefore, the electronic device according to various embodiments of the present disclosure may improve convenience of the user.

The above embodiments of the present disclosure are illustrative and not limitative. Various alternatives and equivalents are possible. Other additions, subtractions, or modifications are obvious in view of the present disclosure and are intended to fall within the scope of the appended claims.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. A method for providing a communication service, the method comprising:
receiving a call connection request from a calling electronic device;
receiving multimedia data from the calling electronic device through a communication channel while the call connection request is maintained; and
outputting the multimedia data in addition to a notification of the call connection request.

2. The method of claim 1, wherein the outputting of the multimedia data comprises:
changing the notification of the call connection request based on the multimedia data by changing at least one of a color, a position, a size, or a form of at least a part of an output screen of the notification; and
outputting the multimedia data on the changed output screen.

3. The method of claim 1, wherein the outputting of the multimedia data comprises:
outputting the multimedia data or data into which the multimedia data are converted as a bell sound of a called electronic device.

4. The method of claim 1, further comprising:
converting a data type of the multimedia data,
wherein the outputting of the multimedia data comprises:
outputting the converted multimedia data.

5. The method of claim 4, wherein the converting of the data type comprises:
converting the data type based on settings of a called electronic device.

6. The method of claim 1, further comprising:
receiving a user input selecting at least a part of the multimedia data displayed on the output screen for providing notification of the call connection request while the call connection request is maintained; and
transmitting the selected multimedia data to the calling electronic device in response to the user input.

7. The method of claim 1, further comprising:
receiving a user input through an output screen for providing the notification of the call connection request, while the call connection request is maintained; and
transmitting multimedia data corresponding to the user input to the calling electronic device through the communication channel.

8. The method of claim 1, further comprising:
ending an output for providing the notification of the call connection request;
receiving a user input to be transmitted to the calling electronic device;
transmitting multimedia data corresponding to the user input to the calling electronic device; and
ending the call connection request in response to transmitting the multimedia data.

9. The method of claim 1, further comprising:
transmitting the multimedia data to the calling electronic device through the communication channel, if a user input is received within a time after the call connection request is ended.

10. The method of claim 1, further comprising:
additionally outputting the multimedia data on an output screen for providing notification of a missed call, if the call connection request is ended.

11. The method of claim 1, further comprising:
receiving status information of the calling electronic device from a server which performs a call connection between the calling electronic device and a called electronic device, if the call connection request is ended; and
additionally outputting the status information of the calling electronic device on an output screen for providing notification of a missed call.

12. The method of claim 1, further comprising:
receiving a request for setting a fake call option from the calling electronic device;
setting the fake call option in a called electronic device; and
if a time to establish a call connection with the calling electronic device is reached:
transmitting the call connection request to the calling electronic device, and
outputting the notification of the call connection request to the called electronic device.

13. The method of claim 12, wherein the time to establish the call connection is determined based on at least one of: a user input of the called electronic device, sensor data received through at least one or more sensors attached to the called electronic device, or user information or user settings stored in the called electronic device.

14. An electronic device, comprising:
a communication interface configured to receive a call connection request from another electronic device and to communicate multimedia data with the other electronic device, while the call connection request is maintained;
an input and output interface configured to receive a user input corresponding to the multimedia data or to output the multimedia data, while the call connection request is output; and
at least one processor configured to perform control to:
communicate the multimedia data, and
input and output the multimedia data based on the multimedia data.

15. The second electronic device of claim 14, wherein the communication interface receives the call connection request through a communication channel connected on a packet-switched (PS) network.
